# EUROPEAN PATENT APPLICATION

(11) **EP 2 565 839 A1**
(43) Date of publication of application: **06.03.2013**
(21) Application number: 12191657.1
(22) Date of filing: 05.10.2010
(51) Int. Cl.: G06Q 30/02

(54) **Multimode online advertisements and online advertisement exchanges**

(30) Priority: 03.11.2009 US 611250
(62) Divisional of application: 10828729.3
(71) Applicant: Yahoo! Inc., Sunnyvale, CA 94089 (US)
(72) Inventor: Churchill, Elizabeth F., San Francisco, CA 94110 (US); Shamma, David Ayman, San Francisco, CA 94107 (US); Jones, M. Cameron, Seattle, WA 98103 (US)
(74) Representative: Pelly, Jason Charles

(57) **Abstract**

Techniques are described for selecting advertisements for display in web pages. In one aspect, a web page content characterization document may be generated that describes aspects of a web page. The web page content characterization document may be used to match advertisements for display in the web page. In another aspect, a multi-display mode advertisement object is provided. The multi-display mode advertisement object is an advertisement object that can be displayed as an advertisement in various formats, as desired for the particular web page destination location. In still another aspect, an in-linking advertisement object is provided. The in-linking advertisement object may be displayed on a web page, and when selected (e.g., clicked on), activates a link to content within the web page, rather than linking off page.

## Description

### BACKGROUND OF THE INVENTION

### Field of the Invention

The present invention relates to the selection of online advertisements.

### Background

According to one definition, advertising is a paid, one-way communication through a medium in which an advertiser is identified, and the message (i.e., the advertisement) provided by the advertiser is controlled. Advertising may be performed for a variety of purposes, including publicity, public relations, product placement, sponsorship, underwriting, and sales promotion. A variety of mediums are used to convey an advertisement, including television, radio, movies, magazines, newspapers, the Internet, and billboards.

Online Advertising relates to the promoting of products and services using the Internet and World Wide Web. Typical online advertisement types include banner ads, floating ads, pop-up ads, and video ads which are provided through a browser to the user's computer desktop. Such advertisements may be placed on a web page to be displayed to the user when loaded by a browser, for example. "Contextual advertising" refers to a form of Internet advertising/marketing where advertisements are selected and served by automated systems based on content displayed to the user. For example, a contextual advertisement selection system may scan the text of a web page for keywords, and select advertisements based on any keywords located in the text. When the web page is displayed for the user, a contextual advertisement selection system provides the selected advertisements for display on the web page.

However, because current contextual advertisement techniques are based on keywords located in the text of web pages, such techniques do not take into account the underlying context of web pages when selecting advertisements, which may not be apparent in the current text provided by web pages. For instance, a website developer may develop a web page with a particular theme or context in mind. This theme or context may not always be reflected in the particular text present on the web page at any particular moment, and thus advertisements selected for display on the web page according to a conventional contextual advertisement selection technique may not relate to the intended theme or context of the web page. Furthermore, the website developer may develop the web page to have some sections of content of the web page that are more important than other sections of content provided by the web page. Current contextual advertisement techniques do not enable advertisements to be selected based on the relative importance of content provided by web pages. Still further, current online advertisements themselves are not flexible enough to adapt to different web page contexts.

### BRIEF SUMMARY OF THE INVENTION

Techniques for displaying advertisements on web pages are provided, including improved advertisement selection techniques, multi-display mode advertisements, and in-page linking advertisements. According to one aspect, a content characterization document is generated for a web page. The content characterization document contains information that characterizes the web page. The content characterization document may be generated by a user or may be generated automatically. The characterization information may be used during a process for selecting advertisements to display on the web page to select advertisements that are tailored to the web page.

For instance, in one implementation, a method for displaying advertisements is provided. A request is received for an advertisement to display on a web page. A content characterization document associated with the web page is received. An advertisement object is selected based at least on the content characterization document. The selected advertisement object is enabled to be transmitted for display on the web page in response to the request.

In another implementation, a system for displaying advertisements is provided. The system includes an advertisement selector. The advertisement selector is configured to receive a request for an advertisement to display on a web page, to receive a content characterization document associated with the web page, to select an advertisement object based at least on the content characterization document, and to enable the selected advertisement object to be transmitted in response to the request.

In another aspect, a multi-display mode advertisement object is provided. The multi-display mode advertisement has multiple display modes. During a process for selecting an advertisement to display on a web page, the multi-display mode advertisement may be selected, and a display mode for the multi-display mode advertisement object may be selected from the multiple display modes that is tailored to the particular web page. For example, the display mode may be selected using the content characterization document.

For instance, in one implementation, a method for configuring a multi-display mode advertisement object for display is provided. A display mode of a plurality of display modes of the multi-display mode advertisement object may be selected based at least on the content characterization document. The multi-display mode advertisement object may be configured to be displayed in the web page according to the selected display mode.

In another implementation, a system for displaying advertisements may include an ad mode selector. The ad mode selector is configured to select a display mode for the advertisement object, and to enable the advertisement object to be configured to be displayed in the web page according to the selected display mode.

In another aspect, methods and systems for in-linking from advertisements to content in web pages are provided. Instead of linking off of a web page when an advertisement displayed in the web page is interacted with (e.g., clicked), an advertisement may be configured with an "in-link that is configured to link to content within the web page. An in-link to content within the first web page may cause a content modification event to occur within the web page, which may be used to enhance the advertising effect of the advertisement.

For example, in one implementation, a method for in-linking is provided. An advertisement is displayed on a web page. Content generated by an application is displayed on the web page. A user is enabled to interact with the displayed advertisement. The application is invoked to generate a modified version of the content in response to the interacting with the displayed advertisement. The modified content is displayed in the web page without refreshing the display of the web page.

Computer program products are also described herein. The computer program products include a computer-readable medium having computer program logic recorded thereon for enabling advertisements to be selected based on website content characterization documents, for enabling multi-display mode advertisement objects, for enabling advertisements to in-link within the web page in which they are displayed, and for enabling further embodiments, according to the implementations described herein.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the relevant art(s) to make and use the invention.

FIG. 1 shows an example of the displaying of advertisements on a web page.

FIG. 2 shows a block diagram of a web page.

FIG. 3 shows a process for generating a web page content characterization document, according to an example embodiment.

FIGS. 4 and 5 show block diagrams of systems for generating a web page content characterization document, according to example embodiments.

FIG. 6 shows a flowchart for selecting advertisements, according to an example embodiment of the present invention.

FIG. 7 shows a block diagram of an advertisement serving system, according to an example embodiment.

FIG. 8 shows a block diagram of an advertisement selector, according to an example embodiment.

FIG. 9 shows a process for generating a multi-display mode advertisement object, according to an example embodiment.

FIG. 10 shows a block diagram of an advertisement development system, according to an example embodiment.

FIG. 11 shows a block diagram of a multi-display mode advertisement object, according to an example embodiment.

FIG. 12 shows a block diagram of an example ad display mode configuration that references advertisement elements, according to an embodiment.

FIGS. 13-16 illustrate example advertisement display modes that may be generated for a multi-display mode advertisement object in a particular advertising situation, according to an embodiment.

FIGS. 17 and 18 show block diagrams of examples of multi-display mode advertisement objects, according to embodiments.

FIG. 19 shows flowchart for configuring a multi-display mode advertisement object, according to an example embodiment.

FIGS. 20 and 21 show block diagrams of portions of the system of FIG. 7, according to example embodiments.

FIGS. 22 and 23 show block diagram views of a web page configured for in-linking, according to an example embodiment.

FIGS. 24 and 25 illustrate an example of advertisement in-page linking with regard to a map, according to an embodiment.

FIG. 26 shows a flowchart for in-linking from advertisements, according to an example embodiment.

FIG. 27 shows a block diagram of an in-linking system, according to an example embodiment.

FIG. 28 shows a process for in-linking using a script, according to an example embodiment.

FIG. 29 shows a web page configured for in-linking, according to an example embodiment.

FIG. 30 shows a block diagram of an example computer system in which embodiments of the present invention may be implemented.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION OF THE INVENTION

### I. Introduction

The present specification discloses one or more embodiments that incorporate the features of the invention. The disclosed embodiment(s) merely exemplify the invention. The scope of the invention is not limited to the disclosed embodiment(s). The invention is defmed by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

### II. Examples of Online Advertising

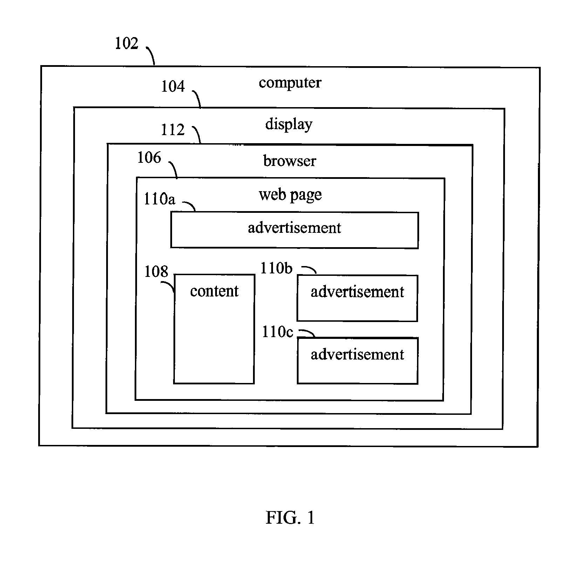

Embodiments of the present invention relate to online advertising. For instance, FIG. 1 shows a block diagram of an example of the displaying of advertisements on a web page 106. In the example of FIG. 1, a user may use a computer 102 having a display 104 to view content 108 included in web page 106. For example, web page 106 may be open in a web browser 112. The user may cause web page 106 to be displayed in any manner, including by navigating to web page 106 according to a URL (uniform resource locator) address for web page 106. Content 108 may be selected by a developer or other entity associated with web page 106 to be included in web page 106. Content 108 may include any one or more of text, images (e.g., GIF file images, JPG file images, etc), video (e.g., MPEG file videos, etc.), audio (e.g., WAV file audio, etc.), multi-media objects, etc. Furthermore, web page 106 may include any number and arrangement of advertisements, including advertisements 110a-110c shown in FIG. 1. Advertisements 110a-110c may be displayed according to any suitable form, including as banner ads, floating ads, pop-up ads, and video ads.

Web page 106 may be expressed in any suitable form, including a markup language or program code (e.g., hypertext markup language (HTML) code). Browser 112 may receive the source code corresponding to web page 106 from a web server. Browser 112 is configured to render the source code of web page 106 in display 104. Browser 112 may obtain content 108 for web page 106 as indicated by the source code by accessing one or more content servers through a network. Furthermore, browser 112 may obtain advertisements 110a-110c for web page 106 by accessing an advertisement server through a network according to the source code.

In the example of FIG. 1, advertisement 110a is shown as a banner ad at the top of web page 106 (e.g., a North banner), and advertisements 110b and 110c are both positioned adjacent to a right edge of web page 106, while content 108 is shown positioned adjacent to a left edge of web page 106. However, in embodiments, web page 106 may include any arrangement of content 108 and advertisements 110. Conventionally, advertisements 110a-110c may be selected for by searching on text included in content 108, and selecting advertisements that are related to keywords found in the searched text.

Current techniques for selecting advertisements based on keywords do not take into account the underlying themes/context of web pages. Embodiments are described herein for enabling advertisements to be selected for display on web pages that are more tailored to the context of the web pages. Examples of such embodiment are described as follows.

### III. Example Embodiments

Example embodiments are described herein for selecting advertisements for display in web pages in a manner that takes into account further factors than merely keyword matching. For example, in an embodiment, a website/web page content characterization document may be generated that describes aspects of the website/web page that can be used to match advertisements. Examples of such aspects include advertisement formats (e.g., images, videos, push pins, etc.), types of content, weightings of the importance of sections/content of the website/web page, etc. Furthermore, in an embodiment, a multi-display mode advertisement object is provided. The multi-display mode advertisement object is an advertisement object that can be displayed as an advertisement in various formats, as selected for the particular destination web page. In still another embodiment, an in-linking advertisement object is provided. The in-linking advertisement object may be displayed on a web page, and when selected (e.g., clicked on), may activate a link to content within the web page.

These embodiments are further described in the following subsections. The example embodiments described herein are provided for illustrative purposes, and are not limiting. Further structural and operational embodiments, including modifications/alterations, will become apparent to persons skilled in the relevant art(s) from the teachings herein.

### A. Example Embodiments for Advertisement Selection Based on Web Page Characterization

In embodiments, a web page may be characterized to indicate aspects of the web page that are to be considered when an advertisement is being selected for display on the web page. The characterization may be performed at the time the web page is developed, or may be performed subsequently to the time the web page is developed. When the web page is displayed, an advertisement may be selected for display on the web page based at least in part on the characterization of the web page (e.g., alternatively to, or in addition to keyword matching, etc.). For example, in embodiments, web page developers and/or web page publishers may characterize contents of their web pages in terms of features of the web pages, including content, interactive components, data, etc. For example, a web page may be characterized as including a map, including geo-location data, including business reviews, including photos of cars, etc. This characterization information is not typically displayed on the web page, and may be used to match advertisements for display on the web page, to enable advertisements to be selected that are more relevant to the contents of the web page.

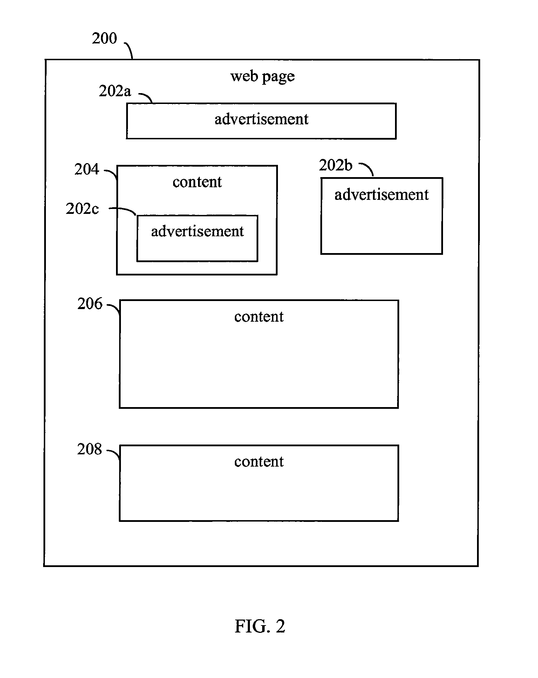

For example, FIG. 2 shows a block diagram of a web page 200. As shown in FIG. 2, web page 200 includes advertisements and content, including first-third advertisements 202a-202c, first content 204, second content 206, and third content 208. Any number of advertisements and amount of content may be included in web page 200.

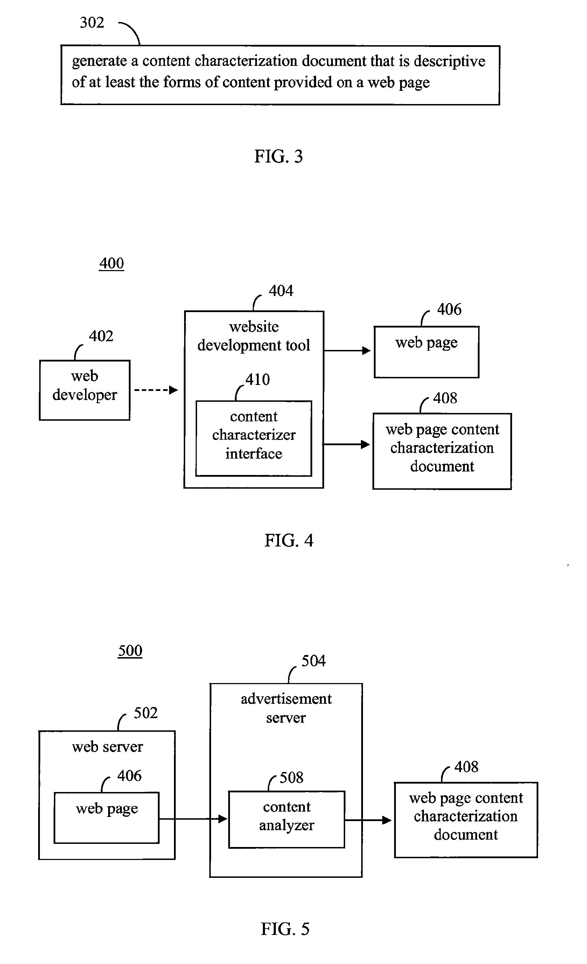

Web page 200 may be characterized, according to embodiments described herein. For instance, FIG. 3 shows a step 302 that may be performed. In step 302, a content characterization document is generated that is descriptive of at least the forms of content provided on a web page. In the example of step 302, a content characterization document may be generated for web page 200 that lists all or a portion of the forms of content provided in web page 200, including first-third content 204, 206, and 208, which include text, images, video, audio, maps, chat spaces, etc. Advertisements 202 may be selected for display on web page 200 that are desirable to be displayed with the listed forms of content. Furthermore, the content characterization document may indicate forms of advertisements 202 that are desired to be displayed on web page 200, such as image ads, video ads, audio ads, push pin ads, banner ads, pop up ads, etc. Still further, the content characterization document may indicate categories of advertisements 202 that are desired to be displayed on web page 200, such as advertisements related to Internet services, products, businesses, etc. For instance, a content characterization document may indicate that a push pin and/or popup bubble ad format is desired for being inserted into a map (e.g., where content 204 is a map, and advertisement 202c is a push pin ad), an ad having a graphic display is desired, an ad focused on business-directory information rather than product information is desired, etc.

Still further, a content characterization document may indicate types of data/contexts for advertisements 202, such as social, commercial, search/query, geo/map, etc. The content characterization document may also provide weights and/or rankings for the importance of each of content 204, 206, and 208 to the overall context/theme of web page 200. For example, even though content 206 may contain images and may cover a relatively large portion of web page 200, content 208, which includes a chat area, may be more important to web page 200 (e.g., web page 200 is a blog). Thus, the content characterization document may rank content 208 higher than content 206 (e.g., content 208 has ranking 1, content 206 has ranking 2, and content 204 has ranking 3), and/or may weight content 208 higher than content 206 (e.g., for a total content importance weight of 100% for web page 200, content 208 may have a weighting of 60%, content 206 may have a weighting of 30%, and content 204 may have a weighting of 10%).

A content characterization document enables a web page developer, including a mashup application developer, to characterize the content of a web page in terms of its constituent parts, including enabling the developer to generate a rank list of the components of the web page, a weighted percentage of components of the web page, etc. For example, a content characterization document may indicate that a particular mashup web page uses maps and photos, and that map/location information is more salient/significant than the photos. In another example, a content characterization document may indicate that a particular mashup is about people sharing photos of their pets. Thus, advertisements related to pet-related products, businesses, and websites are desired for display on the mashup.

A content characterization document may enable an iterative search for advertisement matching. For instance, a web developer may generate a "Perfect Date" mashup that aids people in constructing an evening of activities. A user may perform a search for "Movie Theaters" near a particular location. The mashup may fetch movie listing data from Yahoo! Local, and may display the movie listing data on a map. The mashup developer may specify in the content characterization document a set of "related businesses/services" to be shown alongside the search results. Because the focus of the mashup is on dating, the web developer may specify in the content characterization document that restaurants, bars, and other social venues should be advertised. As the user of the mashup pans and zooms around using the map, and focuses on specific locations, the mashup may iteratively fetch related advertisements according to the content characterization document, and may display the advertisements in the map alongside the theater listings. For example, when the user pans to Theater X, restaurants, bars, and ice cream shops near the theater are added to the map, as well as associated advertisements. If the user clicks on one of the advertisements, additional details regarding the location be provided, and CPM (cost per mille, or cost per thousand) or CPC (cost per click) revenue may be generated if the user clicks through the advertisement.

A content characterization document may be generated in various ways, in embodiments. For instance, FIGS. 4 and 5 show block diagrams of systems that are capable of generating a web page content characterization document 408, according to example embodiments. FIGS. 4 and 4 are described as follows.

FIG. 4 shows a block diagram of a website development system 400. As shown in FIG. 4, website development system 400 includes a website development tool 404. Website development tool 404 is configured to enable a web developer 402 to generate web pages of websites, such as web page 406. Many types of website development tools/website builders are commercially available. Examples of website development tool 404 include Adobe Drearnweaver®, developed by Adobe Systems Inc. of San Jose, California, Yahoo! SiteBuilder, developed by Yahoo! Inc., of Sunnyvale, California, mashup editors, etc.

Web page 406 may be generated in the form of programming code, such as a markup language (e.g., HTML, XHTML, XML, etc.), and may include or reference scripts, such as JavaScript, VBScript, etc. Web page 406 may reference various objects, such as advertisement objects, image files, video files, audio files, etc. In an embodiment, web page 406 may be a "mashup" application or web page, which may include and/or combine multiple web applications (e.g., mapping tools, chat tools, data sharing tools, etc.). Examples of such web applications include image viewing applications (e.g., Yahoo! Flickr™), audio applications, video applications (e.g., YouTube™), mapping tools (e.g., Yahoo!® Maps, MapQuest, and Google™ Maps), or any other network-available web service or application. Such web applications generate information shown as content in web page 406 (e.g., one or more of content 204, 206, and 208 shown in FIG. 2 may be content generated by corresponding web applications).

Furthermore, as shown in FIG. 4, website development tool 404 includes a content characterizer interface 410. Content characterizer interface 410 is an interface for enabling web developer 402 to input content characterization information used to generate web page content characterization document 408. As shown in FIG. 4, content characterizer interface 410 enables web developer 402 to input content characterization information, so that website development tool 404 can generate web page content characterization document 408. Content characterizer interface 410 may include a text-entry interface (e.g., a text editor), a graphical user interface (GUI), and/or any other suitable user interface. Content characterizer interface 410 may be configured to enable web developer 402 to characterize the content of web page 406, to provide weightings and/or rankings of importance of different sections of content of web page 406, to indicate forms of advertisements that are desired for web page 406, to indicate categories of advertisements that are desired for web page 406, and/or to indicate further types of data/contexts for advertisements for web page 406, as described herein. Note that in another embodiment, content characterizer interface 410 may be separate from website development tool 404.

FIG. 5 shows a block diagram of an advertisement serving system 500. As shown in FIG. 5, advertisement serving system 500 includes an advertisement server 504 (or "ad server 504"). Advertisement server 504 is configured to serve advertisements to web pages, such as web page 406, when the web pages are displayed (e.g., by web browsers). Advertisement server 504 may be configured to perform advertisement selection in various ways. Examples of advertisement server 504 include advertisement servers maintained by Yahoo! Inc. and by Google, Inc., of Mountain View, California.

As shown in FIG. 5, advertisement server 504 includes a content analyzer 508. Content analyzer 508 is configured to analyze web pages to generate corresponding web page content characterization documents 408. For example, as shown in FIG. 5, a web server 502 may provide web page 406 to advertisement server 504. Web server 502 may be any computer system configured to serve web pages. Advertisement server 504 receives web page 406, and content analyzer 508 analyzes web page 406 to generate web page content characterization document 408. Content analyzer 508 may be configured to automatically (e.g., based on a content analysis process) analyze web page 406 to characterize the content of web page 406, to generate weighting and/or rankings of importance of different sections of content of web page 406, to determine forms of advertisements that are desired for web page 406, to determine categories of advertisements that are desired for web page 406, and/or to determine further types of data/contexts for advertisements for web page 406. Note that in another embodiment, content analyzer 508 may be separate from advertisement server 504.

Web page content characterization document 408 may be generated, stored, and/or transported in any form. For example, document 408 may be a plain text file, a rich text file, a word processor format file, a program code file (e.g., XML code), a binary file, a collection of files, etc. Web page characterization document 408 may be included in, or may be separate from web page 406.

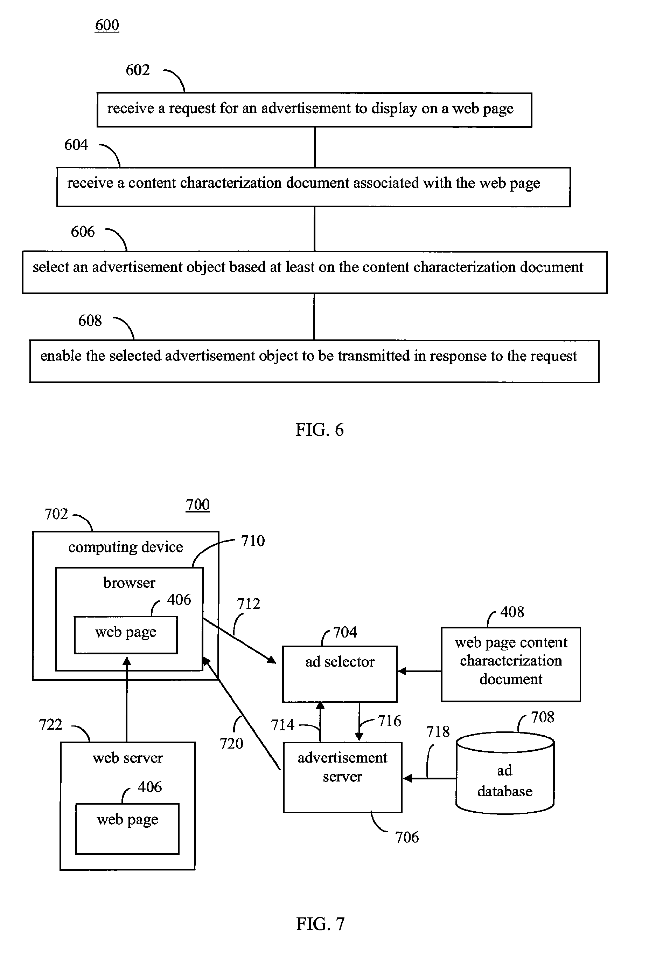

Advertisements may be selected based on web page content characterization document 408 in various ways, in embodiments. For example, FIG. 6 shows a flowchart 600 for selecting advertisements, according to an example embodiment. Various advertisement serving systems may operate according to flowchart 600, in embodiments. For instance, FIG. 7 shows a block diagram of an advertisement serving system 700, according to an example embodiment. System 700 shown in FIG. 7 may operate according to flowchart 600, for example. As shown in FIG. 7, advertisement serving system 700 includes a computing device 702, an advertisement selector 704, an advertisement server 706, an advertisement database 708, and a web server 722. Further structural and operational embodiments will be apparent to persons skilled in the relevant art(s) based on the discussion regarding flowchart 600. Flowchart 600 is described as follows with respect to system 700, for purposes of illustration.

Flowchart 600 begins with step 602. In step 602, a request is received for an advertisement to display on a web page. For example, as shown in FIG. 7, computing device 702 includes a browser 710. Browser 710 may be a web browser, such as Internet Explorer®, developed by Microsoft Corp. of Redmond, Washington, Mozilla Firefox®, developed by Mozilla Corp. of Mountain View, California, or Google® Chrome of Mountain View, California. Browser 710 loads web page code corresponding to web page 406 from a web server 722 that hosts websites/web pages, and displays web page 406. The web page code may indicate an advertisement is to be displayed on web page 406. Accordingly, browser 710 transmits an advertisement request 712 from computing device 702. Advertisement request 712 may be transmitted through a network (e.g., a local area network, a wide area network, a combination of networks such as the Internet, etc.) not shown in FIG. 7, and may be received by ad selector 704.

In step 604, a content characterization document associated with the web page is received. For example, as shown in FIG. 7, ad selector 704 may receive web page content characterization document 408. Web page content characterization document 408 was generated based on web page 406 (e.g., as described above with respect to FIGS. 4 and 5), and characterizes the contents of web page 406. In embodiments, document 408 may be received by ad selector 704 from web server 722 (e.g., document 408 may be stored with web page 406 at web server 722), from browser 710 (e.g., document 408 may be packaged with web page 406), from advertisement server 706 (e.g., document 408 may be stored in ad database 708), or from other source.

In step 606, an advertisement object is selected based at least on the content characterization document. For example, ad selector 704 of FIG. 7 may be configured to select an advertisement object based on document 408 to be transmitted to browser 710 to be displayed as an advertisement in web page 406. As shown in FIG. 7, ad selector 704 may receive advertisement information 714 from advertisement server 706. Advertisement information 714 may be information that is descriptive of the advertisements in ad database 708 that are available to be displayed in web page 406. For instance, advertisement information 714 may include an index of keywords that are associated with any number of advertisements stored in ad database 708 (or otherwise servable by ad server 706), which may be identified in the index by identification number or other manner. Ad selector 704 may compare information in document 408 with advertisement keywords of advertisement information 810 to select one or more advertisements associated with the keywords, to generate an advertisement selection 716. Ad selector 704 may optionally take into account information in addition to that contained in document 408 to select the advertisement object, including keywords of text displayed in web page 406, for example.

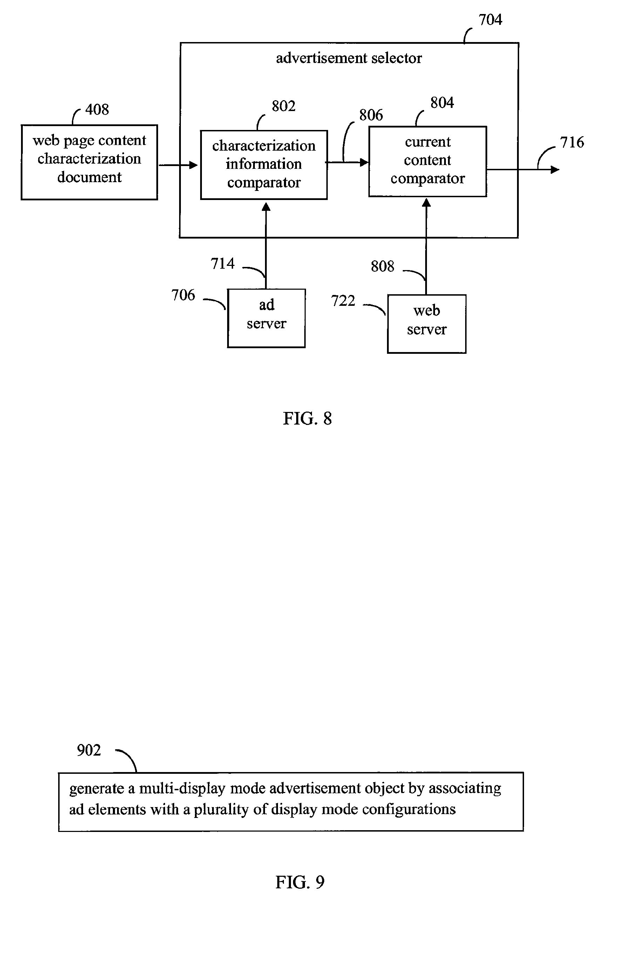

Ad selector 704 may be configured in various ways to select an advertisement object based on document 408, in embodiments. For instance, FIG. 8 shows a block diagram of ad selector 704, according to an example embodiment. As shown in FIG. 8, ad selector 704 may include a characterization information comparator 802 and a current content comparator 804. Current content comparator 804 is optionally present. These elements of ad selector 704 of FIG. 8 are described as follows.

Characterization information comparator 802 receives document 408 and receives advertisement information 714 from ad server 706. Characterization information comparator 802 is configured to compare the information of document 408 to advertisement information 714 to generate an advertisement selection 806. Advertisement selection 806 may include an indication of one or more advertisement objects that match the criteria of document 408. Examples of the type of characterization information included in document 408, and techniques for matching ads to such characterization information, are provided as follows.

For instance, content characterization document 408 may list all or a portion of the forms of content provided in web page 406, such as text, images, video, audio, maps, chat spaces, etc. Characterization information comparator 802 may compare the forms of content indicated in document 408 with the forms of the available advertisements (e.g., images, video, pop ups, etc.) in advertisement information 714 to select advertisements that are desirable to be displayed with the listed forms of content. For example, pre-roll ads may be selected for display on video content, pop-up ads may be selected for display on maps, etc.

Furthermore, content characterization document 408 may indicate forms of advertisements that are desired to be displayed on web page 200, such as image ads, video ads, audio ads, push pin ads, banner ads, pop up ads, etc. Characterization information comparator 802 may compare the desired forms of ads indicated in document 408 with the forms of the available advertisements indicated in advertisement information 714 to select advertisements having the desired ad form.

Still further, content characterization document 408 may indicate categories of advertisements that are desired to be displayed on web page 200, such as advertisements related to particular Internet services, products, businesses, etc. Characterization information comparator 802 may compare the desired categories of ads indicated in document 408 with categories of the available advertisements indicated in advertisement information 714 to select advertisements having the desired ad category.

Still further, content characterization document 408 may indicate types of data/contexts for advertisements, such as social, commercial, search/query, geo/map, etc. Characterization information comparator 802 may compare the indicated types of data/context for ads indicated in document 408 with types of data/context of the available advertisements indicated in advertisement information 714 to select advertisements having the desired types of data/contexts.

Content characterization document 408 may also provide weights and/or rankings for the importance of each section of content in web page 406 to the overall context/theme of web page 406. Characterization information comparator 802 may compare the indicated weights and/or rankings indicated in document 408 with the available advertisements indicated in advertisement information 714 to select advertisements that are tailored toward the higher ranking/higher weighted sections of content of web page 406.

As shown in FIG. 8, current content comparator 804 may optionally be present to refine the advertisement selection performed by characterization information comparator 802. Current content comparator 804 receives advertisement selection 806 and content information 808 (received from web server 722, as shown in FIG. 7 or from browser 710). Content information 808 includes content of web page 406 displayed in browser 710. For instance, content information 808 may include full text of web page 406 or keywords (e.g., nouns, verbs, product names, service names, etc.) included in web page 406. Current content comparator 804 may compare advertisement information associated with the one or more advertisements objects indicated in advertisement selection 806 with content information 808 to select one or more of the one or more advertisements included in advertisement selection 806 that mostly closely match the current content of web page 406, to generate advertisement selection 716. Advertisement selection 716 indicates the selected one or more advertisements that may be provided by ad server 706 to be displayed on web page 406.

Referring back to FIG. 6, in step 608, the selected advertisement object is enabled to be transmitted in response to the request. For example, as shown in FIG. 7, advertisement server 706 may receive advertisement selection 716 from ad selector 704. Advertisement server 706 may access ad database 708 to retrieve an advertisement object 718 indicated in advertisement selection 716 (e.g., by ad identification number), and may transmit advertisement object 718 in an advertisement response 720. Browser 710 receives advertisement response 720, and loads and displays advertisement object 718 in web page 406.

Note that in an embodiment, advertisement selector 704 and advertisement server 706 may be hosted on different computer systems, and may communicate with each other through a network. In another embodiment, advertisement selector 704 and advertisement server 706 may be implemented in the same computer system. Computing device 702 may be any type of electronic device that may be configured with web browsing functionality, including a desktop computer (e.g., a personal computer, etc.), a mobile computing device (e.g., a cell phone, smart phone, a personal digital assistant (PDA), a laptop computer, a notebook computer, etc.), or a mobile email device (e.g., a RIM Blackberry® device).

### B. Example Multi-Display Mode Advertisement Embodiments

Conventional advertisement objects have a single display mode. In other words, a conventional advertisement object is displayed as an advertisement on a web page in the same form each time that the advertisement object is displayed - e.g., either as a simple text ad, an image ad, a video ad, or other type of advertisement. For instance, in controlled publishing environments, advertisement creatives are typically custom-designed for a specific integration with a specific publisher, to attain a particular desired experience/interaction with the user. In open-publisher networks (e.g., Google AdSense®), advertisements are very thin text descriptions.

In an embodiment, a multi-display mode advertisement object is provided. A multi-display mode advertisement object may be displayed in a form selected from a plurality of forms contained in the multi-display mode advertisement object. The particular form may be selected depending on the context into which the advertisement is to be displayed, for example. For example, depending on the selected display format, the multi-display mode advertisement object can be displayed as a text blurb, can be displayed as a pushpin and popup bubble in a map, can be a graphic display/image, can include different textual messages (e.g., can be configured to focus on business-directory information rather than product information), etc.

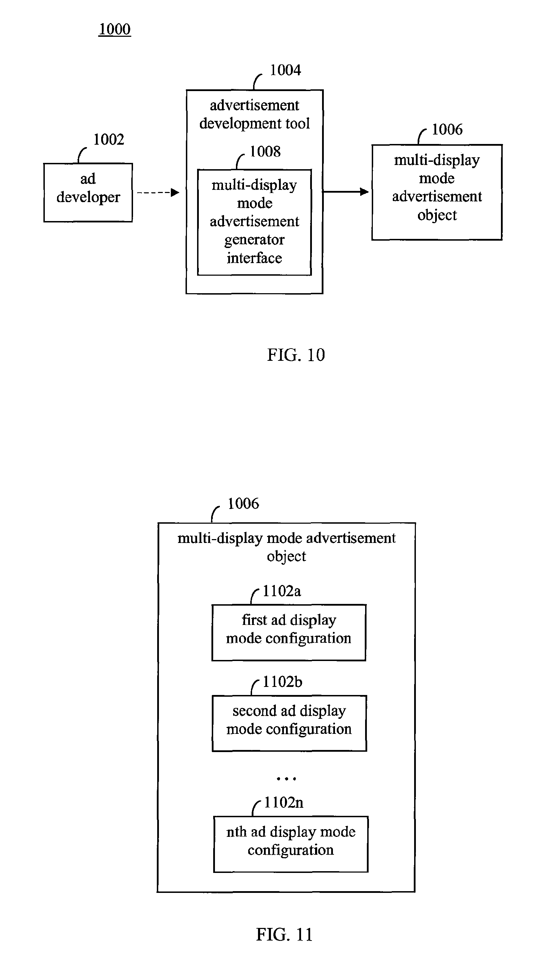

A multi-display mode advertisement object can be generated in various ways, in embodiments. For instance, FIG. 9 shows a step 902 that may be performed, according to an example embodiment. In step 902, a multi-display mode advertisement object is generated by associating ad elements with a plurality of display mode configurations. FIG. 10 shows a block diagram of an advertisement development system 1000, according to an example embodiment. Advertisement development system 1000 is configured to generate multi-display mode advertisement objects according to step 902. System 1000 is described as follows.

As shown in FIG. 10, system 1000 includes an advertisement development tool 1004. Advertisement development tool 1004 is configured to enable an advertisement developer 1002 to generate advertisement objects or "creatives." Advertisement development tool 1004 may be any suitable tool for generating advertisement objects, such as Adobe® Creative Studio 3, published by Adobe Systems, Inc., headquartered in San Jose, California, or Microsoft® Silverlight™ published by Microsoft Corporation of Redmond, Washington.

Furthermore, as shown in FIG. 10, advertisement development tool 1004 includes a multi-display mode advertisement generator interface 1008. Multi-display mode advertisement generator interface 1008 is an interface for enabling ad developer 1002 to configure a multi-display mode advertisement object. As shown in FIG. 10, advertisement development tool 1004 generates a multi-display mode advertisement object 1006. Multi-display mode advertisement generator interface 1008 enables ad developer 1002 to configure multi-display mode advertisement object 1006 to have multiple display mode configurations. For example, FIG. 11 shows a block diagram of multi-display mode advertisement object 1006, according to an embodiment. As shown in FIG. 11, multi-display mode advertisement object 1006 includes a plurality of ad display mode configurations 1102a-1102n. In embodiments, multi-display mode advertisement object 1006 may have any number of two or more ad display mode configurations 1102. Furthermore, more than one ad display mode configuration 1102 may be present for any particular ad display format (e.g., two or more textual ads configurations may be present). Multi-display mode advertisement generator interface 1008 enables ad developer 1002 to configure each of ad display mode configurations 1102a-1102n, and to include the associated ad elements in multi-display mode advertisement object 1006 that are used to display each configuration.

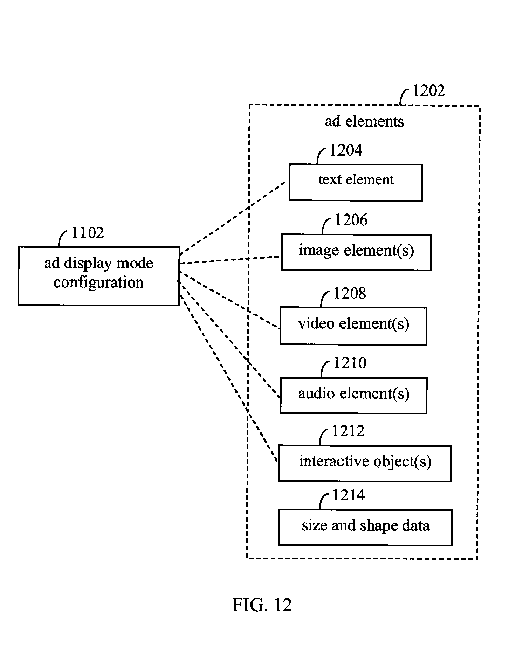

Each of ad display mode configurations 1102a-1102n corresponds to a particular ad display format, such as a text blurb, an image, a video, an interactive ad object, a pushpin and popup bubble, etc. As such, each ad display mode configuration 1102 may include one or more textual elements, image elements, video elements, audio elements, interactive elements, and/or other elements that form the configuration. For example, FIG. 12 shows a block diagram of an example ad display mode configuration 1102 that references advertisement elements 1202, according to an embodiment. As shown in FIG. 12, ad elements 1202 for an ad display mode configuration 1102 may include any one or more of text element(s) 1204, image element(s) 1206, video element(s) 1208, audio element(s) 1210, interactive object(s) 1212, and size and shape data 1214. Text element(s) 1204 may include one or more sets of text that can appear in one or more display modes of an advertisement. Image element(s) 1206 may include one or more images that can be displayed in/as one or more display modes of an advertisement. Video element(s) 1208 may include one or more videos that can be displayed in/as one or more display modes of an advertisement. Audio element(s) 1210 may include audio that is played when an advertisement when displayed. Interactive object(s) 1212 may include one or more interactive objects that can be displayed in/as one or more display modes of an advertisement. Size and shape data 1214 indicate a size of a display mode (e.g., X and Y dimensions) and/or a shape of a display mode (e.g., rectangular, push pin shaped, etc.). A particular ad display mode configuration 1102 may include any one or more of text element(s) 1204, image element(s) 1206, video element(s) 1208, audio element(s) 1210, interactive object(s) 1212, and size and shape data 1214 that may be combined to form an advertisement display mode for multi-display mode advertisement object 1006.

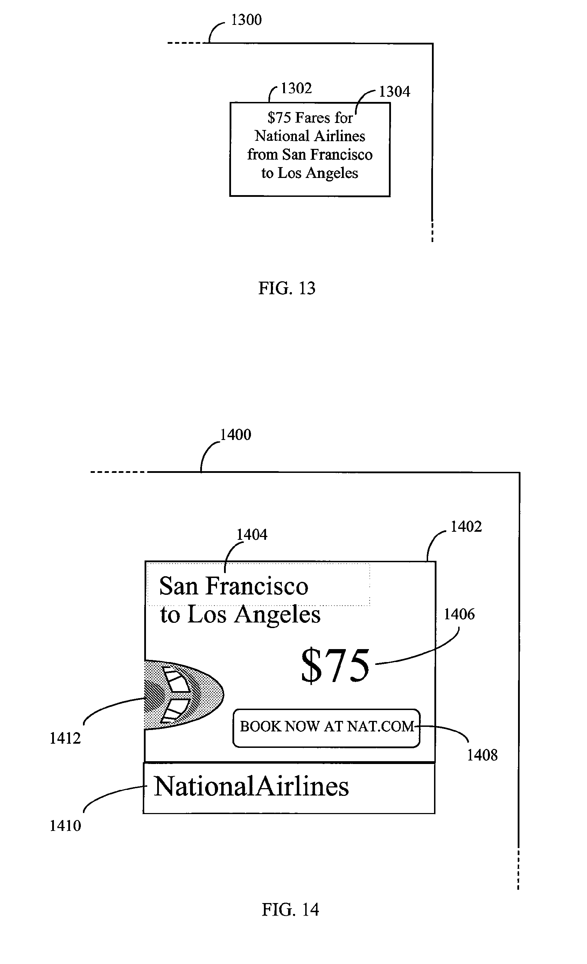

FIGS. 13-16 illustrate example advertisement display modes that may be generated for an example of multi-display mode advertisement object 1006 in a particular advertising situation (an advertisement for a company named "National Airlines"), according to an embodiment. Any one of the display modes shown in FIGS. 13-16 may be displayed for multi-display mode advertisement object 1006, and/or other display modes, depending on the particular display context. The advertisement display modes shown in FIGS. 13-16 are provided for purposes of illustration, and are not intended to be limiting. FIGS. 13-16 are described as follows.

FIG. 13 shows a web page 1300 that includes an advertisement 1302 that is a first ad display mode for the example multi-display mode advertisement object 1006. In the example of FIG. 13, advertisement 1302 is a textual advertisement, and is generated according to a first ad display mode configuration 1102a of the example multi-display mode advertisement object 1006 that includes a text element 1304 (that includes the text "$75 Fares for National Airlines from San Francisco to Los Angeles"). In the example of FIG. 13, first ad display mode configuration 1102a may include size and/or shape data corresponding to the size and shape (rectangular) of advertisement 1302.

FIG. 14 shows a web page 1400 that includes an advertisement 1402 that is a second ad display mode for the example multi-display mode advertisement object 1006. In the example of FIG. 14, advertisement 1402 is an advertisement that combines an image and text, and is generated according to a second ad display mode configuration 1102b of the example multi-display mode advertisement object 1006. As shown in FIG. 14, second display mode configuration 1102b includes text elements 1404, 1406, 1408, and 1410 ("San Francisco to Los Angeles," "$75," "BOOK NOW AT NAT.COM," and "NationalAirlines," respectively), and includes an image element 1412 (that includes a graphic of the nose of a jet, a rectangle with rounded corners, and a straight line). In the example of FIG. 14, second ad display mode configuration 1102b may include size and/or shape data corresponding to the size and shape (rectangular) of advertisement 1402.

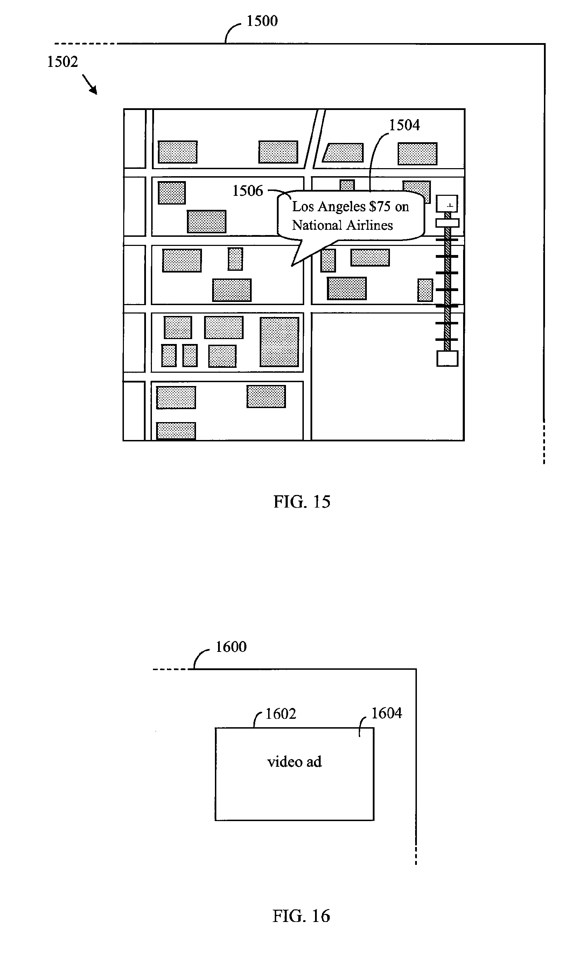

FIG. 15 shows a web page 1500 that includes an advertisement 1504 that is a third ad display mode for the example multi-display mode advertisement object 1006. In the example of FIG. 15, advertisement 1504 is a popup bubble advertisement displayed on a map 1502. Advertisement 1504 is generated according to a third ad display mode configuration 1102c of the example multi-display mode advertisement object 1006 that includes a text element 1506 (that includes the text "Los Angeles $75 on National Airlines"). In the example of FIG. 15, third ad display mode configuration 1102c may include size and/or shape data corresponding to the size and shape (popup bubble shape) of advertisement 1504.

FIG. 16 shows a web page 1600 that includes an advertisement 1602 that is a fourth ad display mode for the example multi-display mode advertisement object 1006. In the example of FIG. 16, advertisement 1602 is a video advertisement, and is generated according to a fourth ad display mode configuration 1102d of the example multi-display mode advertisement object 1006 that includes a video element 1604 (e.g., that may include a video related to National Airlines). In the example of FIG. 16, fourth ad display mode configuration 1102d may include size and/or shape data corresponding to the size and shape (rectangular) of advertisement 1602.

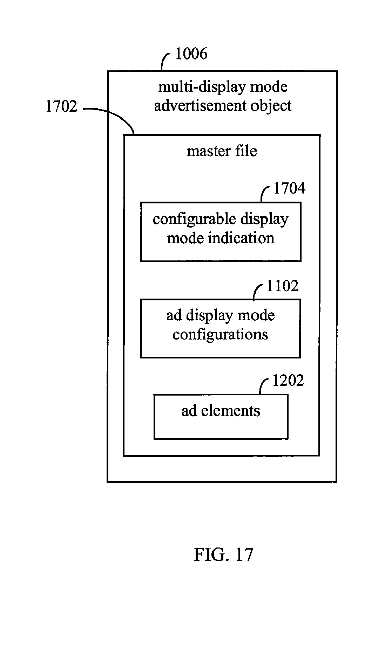

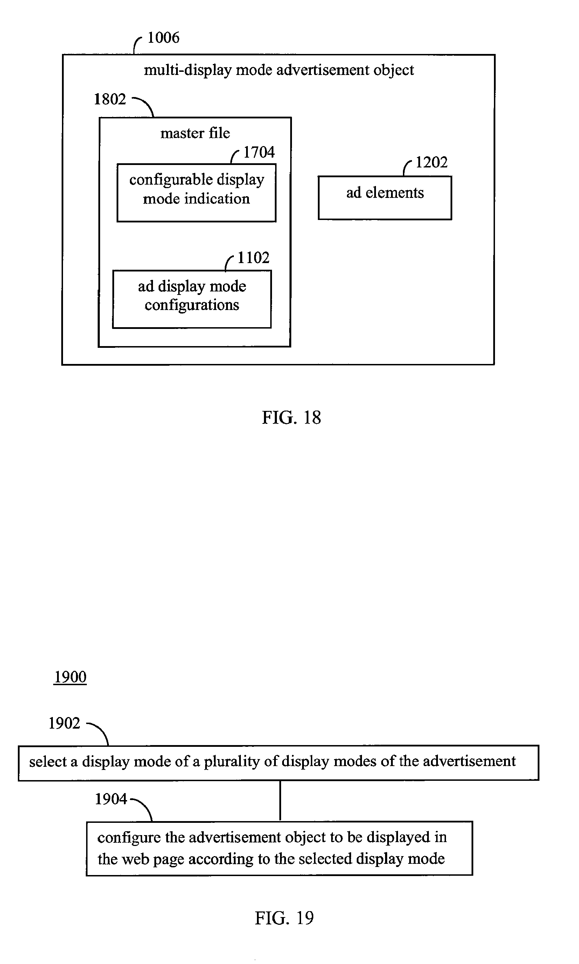

Embodiments of multi-display mode advertisement object 1006 may be packaged in various ways, including in a single file or in multiple files. For instance, FIGS. 17 and 18 show block diagrams of examples of multi-display mode advertisement object 1006, according to embodiments. As shown in the example of FIG. 17, multi-display mode advertisement object 1006 includes a master file 1702. Master file 1702 includes a configurable display mode indication 1704, ad display mode configurations 1102, and ad elements 1202. As shown in the example of FIG. 18, multi-display mode advertisement object 1006 includes a master file 1802 and ad elements 1202. Master file 1802 includes configurable display mode indication 1704 and ad display mode configurations 1102.

Configurable display mode indication 1704 is a configurable indication that is used to select a particular display mode of the ad display mode configurations 1102 (that are selectable for multi-display mode advertisement object 1006) that is to be displayed in a particular instantiation of multi-display mode advertisement object 1006. In an embodiment, configurable display mode indication 1704 may be configured at the time that multi-display mode advertisement object 1006 is selected to be displayed on a web page, so that the desired display mode of multi-display mode advertisement object 1006 will be displayed on the web page.

In the embodiment of FIG. 17, multi-display mode advertisement object 1006 is defined by master file 1702, which includes ad elements 1202 corresponding to ad display mode configurations 1102. Thus, in the example of FIG. 17, multi-display mode advertisement object 1006 is defined by a single file or object. In the embodiment of FIG. 18, ad elements 1202 are separate from master file 1802. As such, in the example of FIG. 18, multi-display mode advertisement object 1006 may be defined by multiple files/objects. In another embodiment, some of ad elements 1202 may be included in a master file of multi-display mode advertisement object 1006, and some of ad elements 1202 may be external to the master file.

Multi-display mode advertisement object 1006 may be selected in various ways for display as an advertisement in a web page, in embodiments. For example, multi-display mode advertisement object 1006 may be selected according to flowchart 600 (FIG. 6) described above, based on a content characterization document. FIG. 19 shows a flowchart 1900 that may be performed during step 606 of flowchart 600, according to an example embodiment. For instance, flowchart 1900 may be performed by advertisement serving system 700 of FIG. 7. Further structural and operational embodiments will be apparent to persons skilled in the relevant art(s) based on the discussion regarding flowchart 1900. Flowchart 1900 is described as follows.

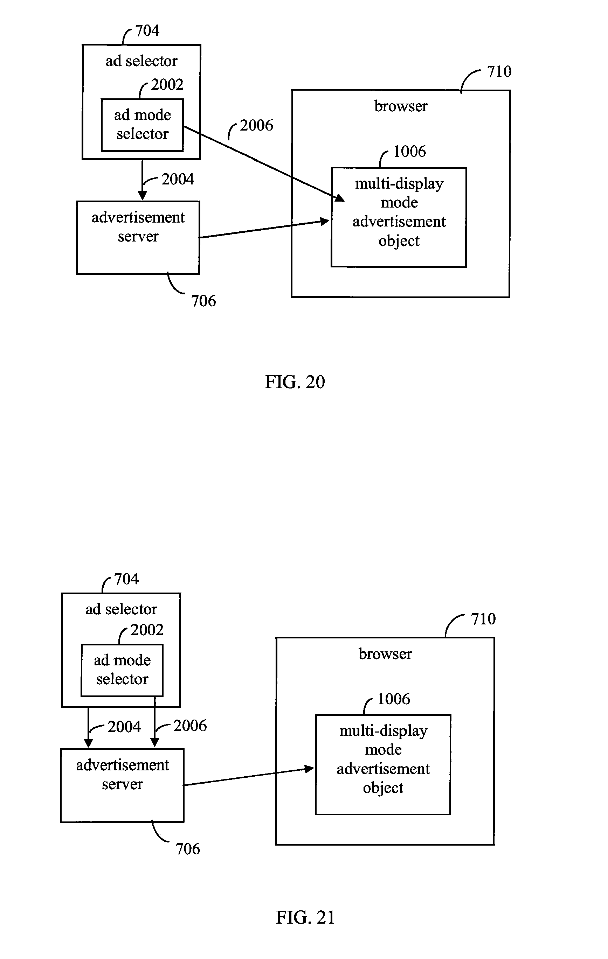

Flowchart 1900 begins with step 1902. In step 1902, a display mode of a plurality of display modes of the advertisement is selected. In an embodiment, ad selector 704 (FIG. 7) may select a display mode of the multiple display modes of multi-display mode advertisement object 1006 to be displayed when multi-display mode advertisement object 1006 is displayed as an advertisement. FIG. 20 shows a portion of system 700 of FIG. 7, including ad selector 704, advertisement server 706, and browser 710, according to an example embodiment. In FIG. 20, ad selector 704 is configured to select a display mode. As shown in FIG. 20, ad selector 704 includes an ad mode selector 2002. Ad mode selector 2002 is configured to select a display mode for multi-display mode advertisement object 1006, when multi-display mode advertisement object 1006 is selected for display as an advertisement.

For instance, in an embodiment, ad mode selector 2002 may be included in characterization information comparator 802 in FIG. 8, and may receive web page content characterization document 408. Characterization information comparator 802 may select multi-display mode advertisement object 1006 for display as an advertisement on a web page. Ad mode selector 2002 may determine which display modes are present in the selected multi-display mode advertisement object 1006, and may select a particular display mode. For example, ad mode selector 2002 may parse a header or other portion of multi-display mode advertisement object 1006 that indicates the display modes. Alternatively, the display modes may be indicated in advertisement information 714, which may be received by ad mode selector 2002. Ad mode selector 2002 may be configured to select a display mode from the available display modes for multi-display mode advertisement object 1006 by comparing the available display modes to characterization information in web page content characterization document 408. For example, document 408 may indicate one or more desired or required display modes for ads displayed on web page 406, or may provide further characterization information (e.g., as described elsewhere herein) that may be used by ad mode selector 2002 to select a display mode from the available display modes. As shown in FIG. 20, ad mode selector 2002 generates a display mode selection 2006, which indicates the selected display mode for a multi-display mode advertisement object 1006 selected for display as an advertisement by ad selector 704.

Referring back to flowchart 1900 of FIG. 19, in step 1904, the advertisement object is configured to be displayed in the web page according to the selected display mode. For example, in an embodiment, multi-display mode advertisement object 1006 is configured so that when displayed as advertisement in response to request 712 (FIG. 7), multi-display mode advertisement object 1006 is displayed according to the display mode indicated by display mode selection 2006. In an embodiment, display mode selection 2006 is entered into configurable display mode indication 1704 (FIGS. 17 and 18) of multi-display mode advertisement object 1006 to configure multi-display mode advertisement object 1006 to be displayed according to the selected display mode. For example, display mode selection 2006 may be read into multi-display mode advertisement object 1006 when multi-display mode advertisement object 1006 is executed.

For instance, in FIG. 20, advertisement server 706 receives an advertisement selection 2004, which indicates multi-display mode advertisement object 1006 as selected to be displayed as an advertisement. As a result, advertisement server 706 transmits multi-display mode advertisement object 1006 to browser 710 to be displayed as an advertisement in a web page. Furthermore, display mode selection 2006 is transmitted to browser 710 from ad mode selector 2002. Browser 710 provides display mode selection 2006 as an input to multi-display mode advertisement object 1006, to cause multi-display mode advertisement object 1006 to be displayed according to the selected display mode.

In another embodiment, multi-display mode advertisement object 1006 may be configured according to the selected display mode at advertisement server 706 (prior to being transmitted to browser 710). For example, FIG. 21 shows the portion of system 700 of FIG. 7 that is shown in FIG. 20, with differences described as follows. In FIG. 21, advertisement server 706 receives advertisement selection 2004 from ad mode selector 2002, which indicates multi-display mode advertisement object 1006 as selected to be displayed as an advertisement. Furthermore, advertisement server 706 also receives display mode selection 2006. Advertisement server 706 provides display mode selection 2006 as an input to multi-display mode advertisement object 1006, to cause multi-display mode advertisement object 1006 to be displayed according to the selected display mode when transmitted to browser 710. Advertisement server 706 transmits multi-display mode advertisement object 1006 to browser 710, and browser displays multi-display mode advertisement object 1006 according to the configured display mode.

### C. Example In-Linking Advertisement Embodiments

Conventionally, advertisements displayed on web pages are configured to link to other web pages. For example, an advertisement may be provided by an advertiser that desires to advertise a product. The advertisement may be displayed on a first web page. A user viewing the first web page may interact with the advertisement (e.g., click on the advertisement using a pointing device) if interested in the product associated with the advertisement. By interacting with the advertisement, a link (e.g., a uniform resource locator (URL) address) associated with the advertisement may be activated, causing a second web page located at the address of the link to be opened. The second web page may be associated with the advertiser, and may provide additional information regarding the product, and/or other products and services of the advertiser.

In an embodiment, instead of linking off the first web page, an advertisement may be configured with an "in-link", which is a link that links to content within the first web page. An in-link to content within the first web page may cause a content modification event to occur within the first web page, which may be used to enhance the advertising effect of the advertisement.

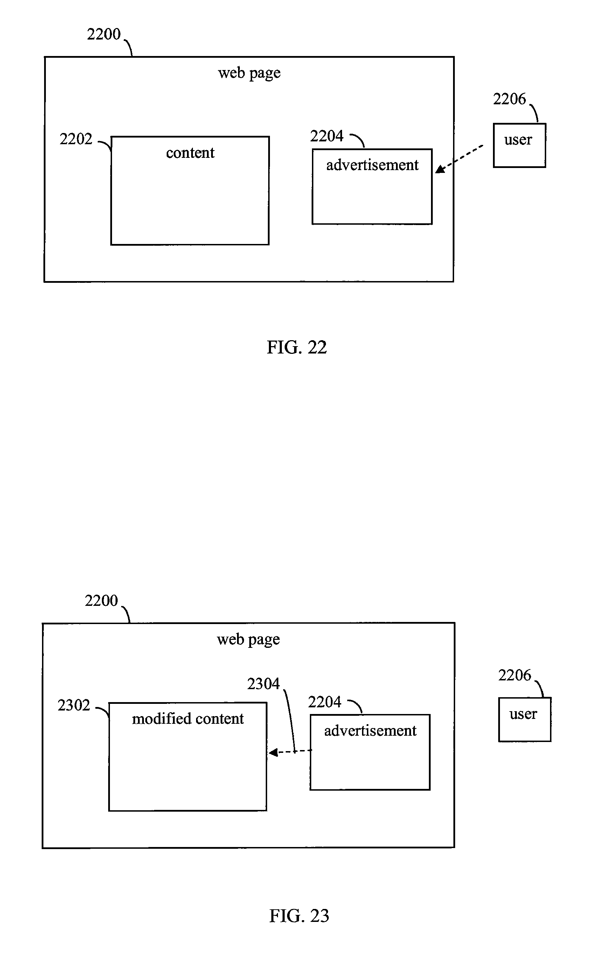

For example, FIGS. 22 and 23 show views of a web page 2200 configured for in-linking, according to an example embodiment. As shown in FIG. 22, web page 2200 includes content 2202 and an advertisement 2204. Content 2202 may be any type of content described herein or otherwise known, including text, video, images, etc. For example, content 2202 may be generated by a web application, such as an image viewing application (e.g., Yahoo! Flickr™), an audio application, a video application (e.g., YouTube™), a mapping application (e.g., Yahoo!® Maps, MapQuest, and Google™ Maps), a communications application (e.g., a chat tool), and/or any other web page-based web service or application. For instance, web page 2200 may be a mashup, as described above.

As shown in FIG. 22, a user 2206 may interact with advertisement 2204 to cause an interaction event. As shown in FIG. 23, the interaction of user 2206 with advertisement 2206 causes an in-linking event 2304, which in turn causes a modification of content 2202 (FIG. 22) by the application to generate modified content 2302 in FIG. 23. Modified content 2302 may be modified with respect to content 2202 in any manner, including having additional and/or modified text, images, video, audio, etc.

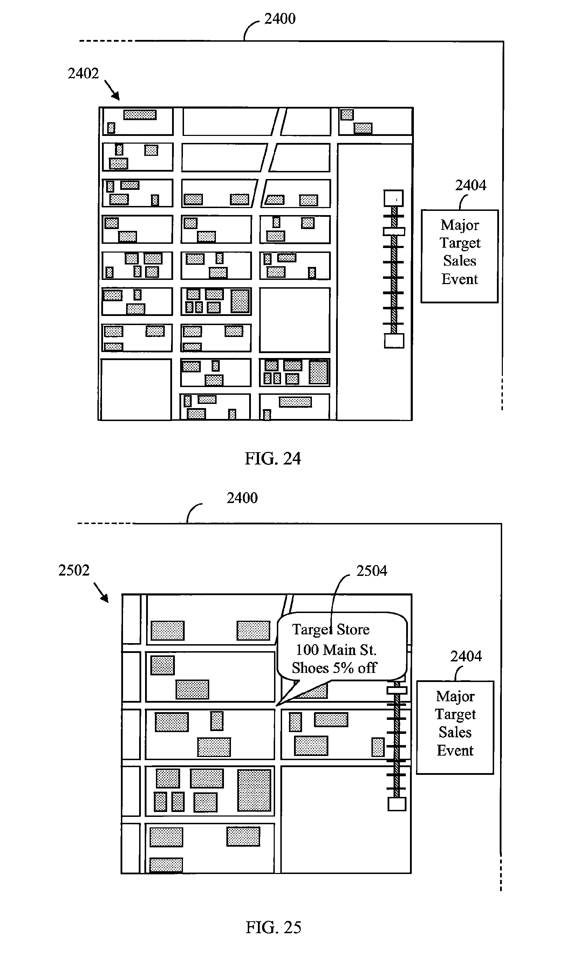

FIGS. 24 and 25 illustrate an example of FIGS. 22 and 23 with regard to mapping content, according to an embodiment. FIG. 24 shows a web page 2400 that displays a map 2402 and an advertisement 2404. For example, a map application referenced by the code of web page 2402 may generate map 2402 as content displayed on web page 2400. In the example of FIG. 24, advertisement 2404 is an advertisement for an advertiser ("Target") that has stores that sell products. A user may be enabled to interact with advertisement 2404. As shown in FIG. 25, upon interacting with advertisement 2404, instead of causing a link to be activated to another web page, the map application is instructed to pan and/or zoom map 2402 to generate a second map 2502 that is centered on a nearest store of the advertiser, and to pop-up bubble advertisement 2504 that is an advertisement for the store (e.g., includes store address info, sales information, a coupon, etc.). If the user clicks on pop-up bubble advertisement 2504, a conventional "off-link" to an external web page (e.g., a web page associated with the advertiser, such as a home page, etc.) may be activated, or another in-link to content within web page 2400 may be activated. Note that web page 2400 does not need to be refreshed/reloaded due to the in-linking event. The map application can modify map 2402 to generate second map 2502, and advertisement 2504 may be retrieved and displayed within web page 2400, without reloading web page 2400. In embodiments, such in-linking behavior may be customized for any web page, including for any combination of advertisements and content.

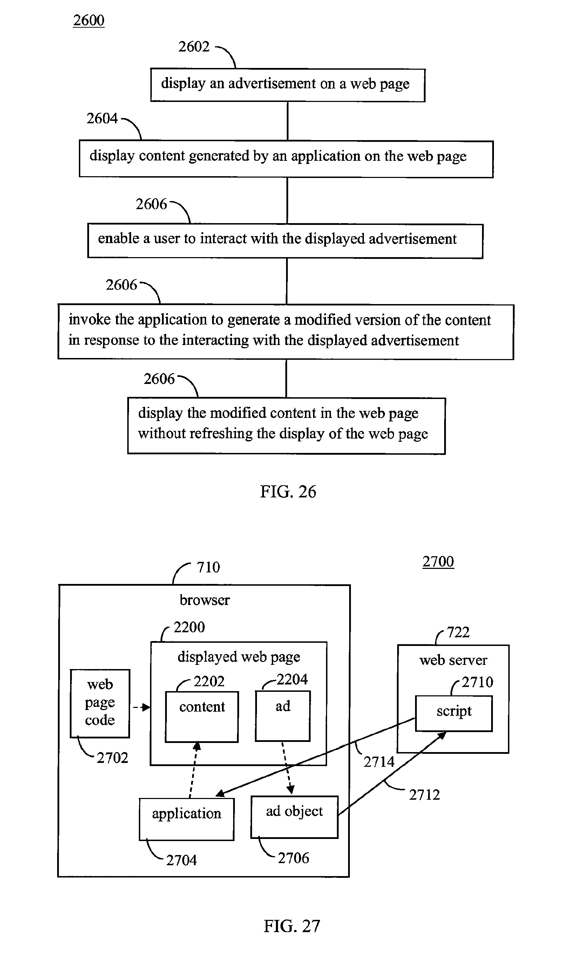

In-linking may be performed in various ways, in embodiments. For instance, FIG. 26 shows a flowchart 2600 for in-linking from advertisements, according to an example embodiment. Various advertisement serving systems may operate according to flowchart 2600, in embodiments. For instance, FIG. 27 shows a block diagram of an in-linking system 2700, according to an example embodiment. System 2700 shown in FIG. 27 may operate according to flowchart 2600, for example. As shown in FIG. 27, in-linking system 2700 includes browser 710 (which may be implemented in computing device 702 of FIG. 7, not shown in FIG. 27) and web server 722. Browser 710 has loaded web page code 2702 that is used by browser 710 to render web page 2200. Browser 710 has further loaded an application 2704 and an advertisement object 2706, according to web page code 2702. Further structural and operational embodiments will be apparent to persons skilled in the relevant art(s) based on the discussion regarding flowchart 2600. Flowchart 2600 is described as follows with respect to system 2700, for purposes of illustration.

Flowchart 2600 begins with step 2602. In step 2602, an advertisement is displayed on a web page. For example, as shown in FIG. 27, browser 710 displays web page 2200. Advertisement 2204 is displayed on web page 2200. Advertisement 2204 is displayed based on advertisement object 2706, which includes code (e.g., HTML, XML, JavaScript, Adobe Flash content, etc.) that defines the display of advertisement 2204.

In step 2604, content generated by an application is displayed on the web page. For instance, as shown in FIG. 27, content 2202 is displayed on web page 2200. Content 2202 may be generated by application 2704, which may be any web application mentioned elsewhere herein or otherwise known.

In step 2606, a user is enabled to interact with the displayed advertisement. In embodiments, a user (e.g., user 2206 of FIG. 22) may be enabled to interact with advertisement 2204 in any manner, including using a user interface mechanism such as a keyboard, a thumb wheel, a pointing device, a roller ball, a stick pointer, a touch sensitive display, a voice recognition system, etc.

In step 2608, the application is invoked to generate a modified version of the content in response to the interacting with the displayed advertisement. For example, in an embodiment, by interacting with advertisement 2204, an in-link (e.g., in-linking event 2304 of FIG. 23) into application 2202 is activated, causing application 2204 to be invoked to modify content 2202.

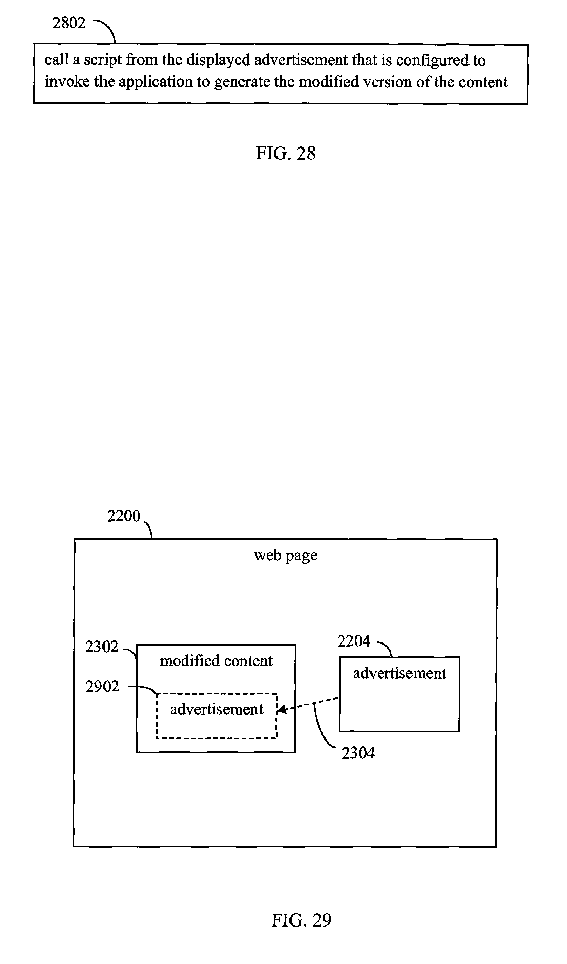

Application 2204 may be invoked by interacting with advertisement 2204 in any manner, in embodiments. For example, in an embodiment, a step 2802 shown in FIG. 28 may be performed in step 2608. In step 2802, a script is called from the displayed advertisement that is configured to invoke the application to generate the modified version of the content. For instance, in one embodiment, when advertisement 2204 is interacted with, a script in advertisement object 2706 may be called that is configured to invoke application 2704 to generated modified content 2302. For example, browser 710 may execute the script. In another embodiment, as shown in FIG. 27, when advertisement 2204 is interacted with, a script 2710 at a web server 722 may be called by advertisement object 2706 (e.g., by a link to an address of script 2710 at web server 722). Advertisement object 2706 may provide an advertisement identifier and/or further information to script 2710 at web server 722 to identify advertisement 2204. Script 2710 may be configured to invoke application 2704 in browser 710 to generated modified content 2302.

The script called by advertisement object 2706 may include and/or may load information regarding the identified advertisement 2204 so that application 2704 may be invoked to generate modified content 2302 in a manner to enhance advertisement 2204. For example, as described above with respect to FIGS. 24 and 26, the script may control a map application to zoom and/or pan to a map location associated with a product and/or service associated with advertisement 2204, and/or to render further information on the map (e.g., to display pointers, text, images, etc.). For example, as shown in FIG. 29, the script may request a second advertisement 2902 to be displayed in/on modified content 2302 (e.g., as a popup bubble ad on a map, as a pre-roll or a post-roll video ad, etc.).

In step 2610, the modified content is displayed in the web page without refreshing the display of the web page. For example, as shown in FIG. 23, modified content 2302 may be displayed in web page 2200. Web page 2200 does not need to be refreshed/reloaded due to the in-linking event. Application 2704 can modify content 2202 to generate modified content 2302 in-page, without reloading web page 2200.

Note that in an embodiment, a developer/publisher of web page 2200 may provide advertisers, such as the advertiser that provided advertisement 2204, with code that may be inserted into their advertisements to enable in-linking within web page 2200 from the advertisements. Advertisers may provide additional descriptions for their advertisements (including location info, detailed descriptions, etc.) to enable the integration of their advertisements with content of web page 2200.

### IV. Further Example Web Applications

As described above, in some cases, web applications may be used to generate content shown in web pages (e.g., may be used to generate content 204, 206, 208 in FIG. 2, content 2202 in FIG. 22, content 2302 in FIG. 23, etc.). Numerous web applications are available on the World Wide Web that may be invoked from web page code in embodiments described herein. Examples of web applications include applications that service queries (e.g., answers.com, Yahoo! Search Monkey, shopping applications, travel applications, etc.), perform social networking functionality (e.g., bookmarking with delicious.com, image sharing with flickr.com, job searching applications, etc.), perform geo functionality/mapping functionality (e.g., Yahoo!® Maps, MapQuest, Google™ Maps, Yahoo! Local, personal location with Yahoo! Fire Eagle, etc.), enable data aggregation (e.g., Apache Hadoop, Yahoo! Pipes, etc.), enable commerce, perform enable Internet based functionality, provide business functionality, and/or product related functionality. These examples of web applications are provided for purposes of illustration, and are not intended to be limiting.

### V. Example Computer Implementations

Website development tool 404, content characterizer interface 410, content analyzer 508, ad selector 704, browser 710, characterization information comparator 802, current content comparator 804, advertisement development tool 1004, multi-display mode advertisement generator interface 1008, ad mode selector 2002, and application 2704, may be implemented in hardware, software, firmware, or any combination thereof For example, website development tool 404, content characterizer interface 410, content analyzer 508, ad selector 704, browser 710, characterization information comparator 802, current content comparator 804, advertisement development tool 1004, multi-display mode advertisement generator interface 1008, ad mode selector 2002, and/or application 2704 may be implemented as computer program code configured to be executed in one or more processors. Alternatively, website development tool 404, content characterizer interface 410, content analyzer 508, ad selector 704, browser 710, characterization information comparator 802, current content comparator 804, advertisement development tool 1004, multi-display mode advertisement generator interface 1008, ad mode selector 2002, and/or application 2704 may be implemented as hardware logic/electrical circuitry.

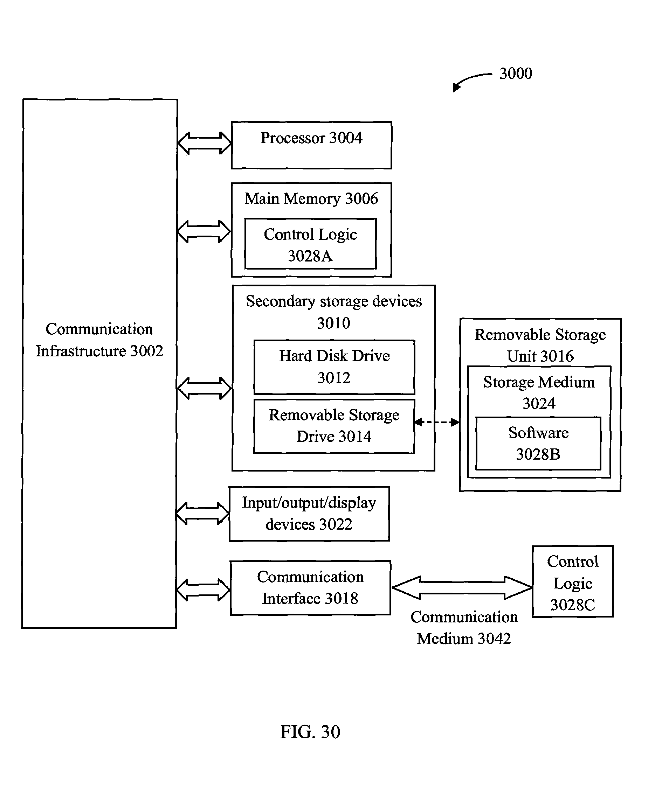

The embodiments described herein, including systems, methods/processes, and/or apparatuses, may be implemented using well known servers/computers, such as a computer 3000 shown in FIG. 30. For example, computer 102, advertisement server 504, web server 502, computing device 702, advertisement server 706, and/or web server 722 can be implemented using one or more computers 3000.

Computer 3000 can be any commercially available and well known computer capable of performing the functions described herein, such as computers available from International Business Machines, Apple, Sun, HP, Dell, Cray, etc. Computer 3000 may be any type of computer, including a desktop computer, a server, etc.

Computer 3000 includes one or more processors (also called central processing units, or CPUs), such as a processor 3004. Processor 3004 is connected to a communication infrastructure 3002, such as a communication bus. In some embodiments, processor 3004 can simultaneously operate multiple computing threads.

Computer 3000 also includes a primary or main memory 3006, such as random access memory (RAM). Main memory 3006 has stored therein control logic 3028A (computer software), and data.

Computer 3000 also includes one or more secondary storage devices 3010. Secondary storage devices 3010 include, for example, a hard disk drive 3012 and/or a removable storage device or drive 3014, as well as other types of storage devices, such as memory cards and memory sticks. For instance, computer 3000 may include an industry standard interface, such a universal serial bus (USB) interface for interfacing with devices such as a memory stick. Removable storage drive 3014 represents a floppy disk drive, a magnetic tape drive, a compact disk drive, an optical storage device, tape backup, etc.

Removable storage drive 3014 interacts with a removable storage unit 3016. Removable storage unit 3016 includes a computer useable or readable storage medium 3024 having stored therein computer software 3028B (control logic) and/or data. Removable storage unit 3016 represents a floppy disk, magnetic tape, compact disk, DVD, optical storage disk, or any other computer data storage device. Removable storage drive 3014 reads from and/or writes to removable storage unit 3016 in a well known manner.

Computer 3000 also includes input/output/display devices 3022, such as monitors, keyboards, pointing devices, etc.

Computer 3000 further includes a communication or network interface 3018. Communication interface 3018 enables the computer 3000 to communicate with remote devices. For example, communication interface 3018 allows computer 3000 to communicate over communication networks or mediums 3042 (representing a form of a computer useable or readable medium), such as LANs, WANs, the Internet, etc. Network interface 3018 may interface with remote sites or networks via wired or wireless connections.

Control logic 3028C may be transmitted to and from computer 3000 via the communication medium 3042.

Any apparatus or manufacture comprising a computer useable or readable medium having control logic (software) stored therein is referred to herein as a computer program product or program storage device. This includes, but is not limited to, computer 3000, main memory 3006, secondary storage devices 3010, and removable storage unit 3016. Such computer program products, having control logic stored therein that, when executed by one or more data processing devices, cause such data processing devices to operate as described herein, represent embodiments of the invention.

Devices in which embodiments may be implemented may include storage, such as storage drives, memory devices, and further types of computer-readable media. Examples of such computer-readable storage media include a hard disk, a removable magnetic disk, a removable optical disk, flash memory cards, digital video disks, random access memories (RAMs), read only memories (ROM), and the like. As used herein, the terms "computer program medium" and "computer-readable medium" are used to generally refer to the hard disk associated with a hard disk drive, a removable magnetic disk, a removable optical disk (e.g., CDROMs, DVDs, etc.), zip disks, tapes, magnetic storage devices, MEMS (micro-electromechanical systems) storage, nanotechnology-based storage devices, as well as other media such as flash memory cards, digital video discs, RAM devices, ROM devices, and the like. Such computer-readable storage media may store program modules that include computer program logic for website development tool 404, content characterizer interface 410, content analyzer 508, ad selector 704, browser 710, characterization information comparator 802, current content comparator 804, advertisement development tool 1004, multi-display mode advertisement generator interface 1008, ad mode selector 2002, application 2704, step 302, flowchart 600, step 902, flowchart 1900, flowchart 2600, and/or step 2802 (including any one or more steps of flowcharts 600, 1900, and 2600), and/or further embodiments of the present invention described herein. Embodiments of the invention are directed to computer program products comprising such logic (e.g., in the form of program code or software) stored on any computer useable medium. Such program code, when executed in one or more processors, causes a device to operate as described herein.

The invention can work with software, hardware, and/or operating system implementations other than those described herein. Any software, hardware, and operating system implementations suitable for performing the functions described herein can be used.

### V. Conclusion

While various embodiments of the present invention have been described above, it should be understood that they have been presented by way of example only, and not limitation. It will be apparent to persons skilled in the relevant art(s) that various changes in form and details may be made to the embodiments described above without departing from the spirit and scope of the invention as defined in the appended claims. Accordingly, the breadth and scope of the present invention should not be limited by any of the above-described exemplary embodiments, but should be defined only in accordance with the following claims and their equivalents.
Example methods and systems are set out in the following paragraphs (NPs):
NP1. A method for displaying advertisements, comprising:
   receiving a request for an advertisement to display on a web page;
   receiving a content characterization document associated with the web page;
   selecting an advertisement object based at least on the content characterization
   document; and
   enabling the selected advertisement object to be transmitted for display on the web page in response to the request.
NP2. The method of NP1, wherein the advertisement object is a multi-display mode advertisement object, wherein said selecting comprises:
   selecting a display mode of a plurality of display modes of the advertisement object based at least on the content characterization document; and
   configuring the advertisement object to be displayed in the web page according to the selected display mode.
NP3. The method of NP2, wherein said selecting a display mode of a plurality of display modes of the advertisement object based at least on the content characterization document comprises:
   selecting the display mode to be a video ad display mode, a push pin ad display mode, a popup bubble display mode, a text ad display mode, or an image ad display mode.
NP4. The method of NP1, wherein the content characterization document indicates a desired advertisement form for the web page, wherein said selecting comprises:
   selecting at least one advertisement object from an ad database that may be displayed according to the desired advertisement form.
NP5. The method of NP4, wherein said selecting at least one advertisement object from an ad database that may be displayed according to the desired advertisement form comprises:
selecting a multi-display mode advertisement object from the ad database that includes a display mode that matches the desired advertisement form.
NP6. The method of NP1, further comprising:
   receiving content information indicating content included in the web page;
   wherein said selecting comprises:
      selecting the advertisement object based at least on the content characterization document and the content information.
NP7. The method of NP6, further comprising:
   receiving second content information that indicates a modification to the content of the web page; and
   selecting a second advertisement object based at least on the content characterization document and the modification to the content of the web page.
NP8. A system for displaying advertisements, comprising:
   an advertisement selector configured to receive a request for an advertisement to display on a web page, to receive a content characterization document associated with the web page, to select an advertisement object based at least on the content characterization document, and to enable the selected advertisement object to be transmitted in response to the request.
NP9. The system of NP8, wherein the advertisement object is a multi-display mode advertisement object, wherein the advertisement selector includes an ad mode selector that is configured to select a display mode for the advertisement object, and to enable the advertisement object to be configured to be displayed in the web page according to the selected display mode.
NP10. The system of NP9, wherein the multi-display mode advertisement object includes at least one of a video ad display mode, a push pin ad display mode, a popup bubble ad display mode, a text ad display mode, or an image ad display mode.
NP11. The system of NP8, wherein the content characterization document indicates a desired advertisement form for the web page, wherein the advertisement selector includes a characterization information comparator configured to select at least one advertisement object from an ad database that may be displayed according to the desired advertisement form.
NP12. The system of NP11, wherein the characterization information comparator is configured to select a multi-display mode advertisement object from the ad database that includes a display mode that matches the desired advertisement form.
NP13. The system of NP8, wherein the advertisement selector includes a content comparator configured to receive content information that indicates content included in the web page, to compare the content information to the selected at least one advertisement object, and to select the advertisement object based on the compare.
NP14. The system of NP13, wherein the content comparator is configured to receive second content information that indicates a modification to the content of the web page to compare the second content information to the selected at least one advertisement object, and to select a second advertisement object based at least on the compare of the second content information to the selected at least one advertisement object.
NP15. A method, comprising:
   displaying an advertisement on a web page;
   displaying content generated by an application on the web page;
   enabling a user to interact with the displayed advertisement;
   invoking the application to generate a modified version of the content in response to the interacting with the displayed advertisement; and
   displaying the modified content in the web page without refreshing the display of the web page.
NP16. The method of NP15, wherein said invoking comprises:
   calling a script from the displayed advertisement in response to the user interacting with the displayed advertisement, the script being configured to invoke the application to generate the modified version of the content.
NP17. The method of NP16, , wherein said calling comprises:
   invoking the script at a remote server.
NP18. The method of NP16, wherein said calling comprises:
   invoking the script in a web browser that is displaying the web page.
NP19. The method of NP15, wherein said displaying content generated by an application on the web page comprises:
   displaying a map generated by a map generating application on the web page;
   wherein said invoking comprises:
   invoking the map generating application to modify the map; and
   wherein said displaying the modified content in the web page without refreshing the display of the web page comprises:
   displaying the modified map on the web page.
NP20. The method of NP15, further comprising:
   displaying a second advertisement in the web page overlaid on the modified content in response to the user having interacted with the displayed first advertisement.

## Claims

1. A method, comprising:
displaying an advertisement on a web page;
displaying content generated by an application on the web page;
enabling a user to interact with the displayed advertisement;
invoking the application to generate a modified version of the content in response to the interacting with the displayed advertisement; and
displaying the modified content in the web page without refreshing the display of the web page.

2. The method of claim 1, wherein said invoking comprises:
calling a script from the displayed advertisement in response to the user interacting with the displayed advertisement, the script being configured to invoke the application to generate the modified version of the content.

3. The method of claim 2, wherein said calling comprises:
invoking the script at a remote server.

4. The method of claim 2, wherein said calling comprises:
invoking the script in a web browser that is displaying the web page.

5. The method of claim 1, wherein said displaying content generated by an application on the web page comprises:
displaying a map generated by a map generating application on the web page;
wherein said invoking comprises:
invoking the map generating application to modify the map; and
wherein said displaying the modified content in the web page without refreshing the display of the web page comprises:
displaying the modified map on the web page.

6. The method of claim 1, further comprising:
displaying a second advertisement in the web page overlaid on the modified content in response to the user having interacted with the displayed first advertisement.

7. The method of claim 1, wherein the application is a web application, the method further comprising:
loading the web application in the browser.

8. An in-linking system, comprising:
an application; and
an advertisement;
wherein a web browser that executes in a computer system is configured to load and display a web page, including being configured to display the advertisement on the web page and display content generated by the application on the web page;
wherein the web browser is configured to enable a user to interact with the displayed advertisement;
wherein the application is invoked to generate a modified version of the content in response to the interacting with the displayed advertisement; and
wherein the web browser is caused to display the modified content in the web page without refreshing the display of the web page.

9. The in-linking system of claim 8, wherein a script of the displayed advertisement is called in response to the user interacting with the displayed advertisement, the script being configured to invoke the application to generate the modified version of the content.

10. The in-linking system of claim 9, wherein the script is invoked at a remote server.

11. The in-linking system of claim 9, wherein script is invoked in the web browser that displays the web page.

12. The in-linking system of claim 8, wherein the application is a map generating application configured to generate a map that is displayed on the web page;
wherein the map generating application is invoked to modify the map in response to the user interacting with the displayed advertisement; and
wherein the web browser is configured to display the modified map on the web page.

13. The in-linking system of claim 8, wherein the web browser is caused to display a second advertisement in the web page overlaid on the modified content in response to the user interacting with the displayed first advertisement.

14. The in-linking system of claim 8, wherein the application is a web application that is loaded in the web browser.

15. A computer program which, when executed by a processor, causes the processor to carry out the method of any of claims 1 to 7.
